(19) Europäisches Patentamt
European Patent Office
Office européen des brevets

(11) EP 2 850 121 B1

# (12) EUROPEAN PATENT SPECIFICATION

(45) Date of publication and mention of the grant of the patent:
**11.07.2018 Bulletin 2018/28**

(21) Application number: **13723756.6**

(22) Date of filing: **15.05.2013**

(51) Int Cl.:
***C08K 5/00*** (2006.01)
***C08G 75/23*** (2006.01)
***C08L 81/06*** (2006.01)
***B01D 69/08*** (2006.01)
***B01D 71/68*** (2006.01)
***B65D 1/02*** (2006.01)
***C08K 3/00*** (2018.01)

(86) International application number:
**PCT/EP2013/060088**

(87) International publication number:
**WO 2013/171280 (21.11.2013 Gazette 2013/47)**

## (54) HIGH PERFORMANCE POLYSULFONES MADE FROM CYCLOALIPHATIC DIOLS

HOCHLEISTUNGS-POLYSULFONE AUS CYCLOALIPHATISCHEN DIOLEN

POLYSULFONES À HAUTE PERFORMANCE DE DIOLS CYCLOALIPHATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2012 US 201261647356 P**
**05.09.2012 EP 12183142**

(43) Date of publication of application:
**25.03.2015 Bulletin 2015/13**

(73) Proprietor: **Solvay Specialty Polymers USA, LLC.**
**Alpharetta, GA 30005 (US)**

(72) Inventors:
- **BHATNAGAR, Atul**
  **Alpharetta, Georgia 30005 (US)**
- **CHEN, Hong**
  **Alpharetta, Georgia 30005 (US)**
- **LOUIS, Chantal**
  **Alpharetta, Georgia 30005 (US)**
- **TAYLOR, Narmandakh**
  **Cumming, Georgia 30028 (US)**
- **POLLINO, Joel**
  **John Creeks, Georgia 30022 (US)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
- **DATABASE CAPLUS [Online] CHEMICAL ABSTRACTS SERVICE, COLUMBUS, OHIO, US; 5 August 1989 (1989-08-05), Tsubaki et al.: "Manufacture of aromatic polyether-polysulfones with good heat-resistance", XP002685808, retrieved from STN Database accession no. 1989:440586 & DATABASE WPI Thomson Scientific, London, GB; AN 1989-020640 TSUBAKI ET AL.: "New polysulphone copolymer prodn. - by reacting a bisphenol=A halo deriv. with 4,4'-di:halo-di:phenyl sulphone and di:phenyl sulphone-hydroquinone prepolymer", & JP 63 297423 A (HITACHI LTD, NISSAN CHEM IND LTD) 5 December 1988 (1988-12-05) & JP 63 297423 A (NISSAN CHEMICAL IND LTD; HITACHI LTD) 5 December 1988 (1988-12-05)**
- **DATABASE CAPLUS [Online] CHEMICAL ABSTRACTS SERVICE, COLUMBUS, OHIO, US; 19 April 1991 (1991-04-19), Inaba et al.: "Diamines and their manufacture", XP002685809, retrieved from STN Database accession no. 1991:144267 & JP 2 247155 A (MITSUBISHI PETROCHEMICAL CO) 2 October 1990 (1990-10-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 850 121 B1

## Description

This application claims priority to U.S. provisional application No. 61/647356 filed May 15, 2012 and to European application No. 12183142.4 filed on September 5, 2012, the whole content of each of these applications being incorporated herein by reference for all purposes.

FIELD OF THE INVENTION

The invention relates to new poly(arylethersulfone) polymers comprising cycloaliphatic moieties featuring exceptional properties. The invention further relates to methods of manufacturing the invented polymers, compositions containing such polymers, and articles made from such polymers.

DESCRIPTION OF THE RELATED ART

Poly(arylethersulfone) is a generic term used to describe any polymer containing at least one ether group (-O-), at least one sulfone group ($-SO_2-$) and at least one arylene group.

A commercially important group of poly(arylethersulfones) includes polysulfone polymers identified herein as PSU. PSU contains reacted units of diphenyl sulfone and bisphenol A (BPA). Such PSU is commercially available from Solvay Specialty Polymers, L.L.C. (i.e., under the trademark UDEL®). The structure of the repeating units of a UDEL polysulfone is made by condensing bisphenol A (BPA) and 4,4'-dichlorodiphenyl sulfone (DCDPS).

PSU has a glass transition temperature of about 185°C and exhibits high strength and toughness.

RADEL® (polyphenylsulfone, identified herein as PPSU) is another polysulfone available from Solvay Specialty Polymers, L.L.C. which is made by reacting units of 4,4'-dichlorodiphenyl sulfone (DCDPS) and 4,4'-biphenol (BP).

Other polysulfones include co-polymers having at least two different types of sulfone and/or diphenol groups. VERADEL® polyethersulfones, available from Solvay Specialty Polymers, L.L.C., include a polyethersulfone portion made from repeating or recurring groups of formula $-Ar-SO_2-Ar-O-$, wherein Ar is a substituted or unsubstituted aryl group such as a phenyl, biphenyl, bisphenol or any other aryl group containing an aromatic or hetero-aromatic ring.

Because of their excellent mechanical and thermal properties, coupled with outstanding hydrolytic stability and chemical resistance, poly(aryl ether sulfones) have been used for making products in various and diverse applications handling a broad range of end-use temperatures (from - 40°C to 204°C), such as plumbing articles, food service articles, medical trays, membranes etc.

Applications including those requiring contact with water, food, drugs and/or blood, require the use of polymeric materials meeting certain requirements mandated by organizations such as the Food and Drug Administration (FDA), the European Food Safety Agency and the Environmental Protection Agency (EPA). It was mentioned that EPA would add BPA to its list of chemicals of concern, requiring environmental testing. But it should be noted that the FDA is not proposing any regulations yet related to the requirements of BPA extracted from plastics but the use of polymeric materials containing BPA could be subject to more stringent regulations in the future.

One of the main issues of some of the commercially available poly(arylethersulfones) from which the repeating units are derived from bisphenol A (BPA) such as notably in UDEL® polysulfones or/and derived from 4,4'-biphenol (BP) such as notably in RADEL® polyphenylsulfones is that said poly(arylethersulfone) polymers can be adversely affected by long term exposure to UV light.

There is thus a continuous need for new poly(arylethersulfone) polymers which do not include the BPA monomer and/or BP monomer and exhibit all the advantages offered today by the commercially available poly(arylethersulfone) polymers, including easiness to produce at an industrial scale, moderate cost, good or improved mechanical properties such as notably the elongation at yield and thermal properties, while featuring some other beneficial properties, not encountered in the current poly(arylethersulfone) polymers described above, such as notably offering a much better retention of mechanical properties, in particular tensile strength, and minimal loss of optical clarity (i.e. % transmission) upon long UV exposure time.

SUMMARY OF INVENTION

The Applicant has now found that certain poly(arylethersulfone) polymers can solve above mentioned problems and exhibit good mechanical properties, while also featuring very good resistance to UV radiation, especially maintaining mechanical properties and minimal loss of optical clarity (i.e. % transmission) upon long UV exposure time. In addition, the new poly(arylethersulfone) polymers exhibit virtually no estrogenic activity.

It is thus an object of the present invention a poly(arylethersulfone) polymer comprising recurring units derived from the direct reaction from at least one aromatic dihalocompound comprising at least one $-S(=O)_2-$ group and at least one diol (D) having general formula (I)

HO-Q-OH (I)

wherein Q is a group comprising from 4 to 30 carbon atoms, preferably from 8 to 15 which comprises at least one cycloaliphatic moiety (M).

It is another object of the present invention a poly(arylethersulfone) polymer consisting essentially of recurring units derived from the direct reaction from at least one aromatic dihalocompound comprising at least one -$S(=O)_2$-group and at least one diol (D) having general formula (I)

HO-Q-OH (I)

wherein Q is a group comprising from 4 to 30 carbon atoms, preferably from 8 to 15 which comprises at least one cycloaliphatic moiety (M), with the proviso that said cycloaliphatic moiety (M) does not comprise any heteroatoms in the ring, and said poly(arylethersulfone) polymer is having a number average molecular weight ($M_n$) of above 8 000.

The expression 'consisting essentially of' is used within the context of the present invention for defining constituents of a polymer to take into account end chains, defects, irregularities and monomer rearrangements which might be comprised in said polymers in minor amounts, without this modifying essential properties of the polymer.

According to the present invention, the poly(arylethersulfone) polymer has advantageously a number average molecular weight ($M_n$) above 10 000, more preferably above 12 000, more preferably above 15 000 and more preferably above 20 000.

Upper limit for the number average molecular weight ($M_n$) of the poly(arylethersulfone) polymer is not particularly critical and will be selected by the skilled in the art in view of final field of use.

In one embodiment of the present invention, the poly(arylethersulfone) polymer has advantageously a number average molecular weight ($M_n$) equal to or below 120 000, preferably equal to or below 100 000, preferably equal to or below 90 000, preferably equal to or below 80 000, preferably equal to or below 70 000 preferably equal to or below 68 000, preferably equal to or below 55 000.

In one embodiment of the present invention, the poly(arylethersulfone) polymer has advantageously a number average molecular weight ($M_n$) in the range from 8 000 to 100 000 preferably ranging from 10 000 to 80 000, preferably ranging from 12 000 to 70 000.

The expression "number average molecular weight ($M_n$)" is hereby used according to it usual meaning and mathematically expressed as :

$$M_n = \frac{\sum M_i \cdot N_i}{\sum N_i}$$

wherein Mi is the discrete value for the molecular weight of polymer molecule, $N_i$ is the number of polymer molecules with molecular weight $M_i$, then the weight of all polymer molecules is $\sum M_i N_i$ and the total number of polymer molecules is $\sum N_i$.

$M_n$ can be suitably determined by gel-permeation chromatography (GPC), calibrated with polystyrene standards.

Other molecular parameters which can be notably determined by GPC are the weight average molecular weight ($M_w$):

$$M_w = \frac{\sum M_i^2 \cdot N_i}{\sum M_i \cdot N_i},$$

wherein $M_i$ is the discrete value for the molecular weight of a polymer molecule, $N_i$ is the number of polymer molecules with molecular weight $M_i$, then the weight of polymer molecules having a molecular weight $M_i$ is $M_i N_i$.

For the purpose of the present invention, the polydispersity index (PDI) is hereby expressed as the ratio of weight average molecular weight ($M_w$) to number average molecular weight ($M_n$).

The poly(arylethersulfone) polymer of the present invention has advantageously a polydispersity index (PDI) of more than 1.5, preferably more than 1.90, more preferably more than 2.00.

The poly(arylethersulfone) polymer of the present invention has advantageously a polydispersity index (PDI) of less than 4.0, preferably of less than 3.8, preferably of less than 3.5.

In a specific embodiment of the present invention, the fraction of polymer molecules comprised in the poly(arylethersulfone) polymer, as detailed above, having a molecular weight of below 3000 [% fraction $M^{<3000}$, hereinafter] with respect to all the polymer molecules in said poly(arylethersulfone) polymer is advantageously below 10 %, preferably below 8 % and more preferably below 5 %.

% fraction $M^{<3000}$ can be suitably determined from slice data of GPC chromatogram by help of gel-permeation chromatography software which is calibrated with polystyrene standards, in which case it corresponds to :

$$\% \, fraction \; M < 3000 = \frac{\int_{M=0}^{M=3000} AU \, dM}{\int_{M=0}^{M=\infty} AU \, dM} * 100\%$$

wherein AU (detector response in $\mu$V) is the y-axis unit and log M (logarithm of molecular weight) is the x-axis unit.

The poly(arylethersulfone) polymer comprises more than 10 % wt, preferably more than 30 % wt, more preferably more than 50 % wt, still more preferably more than 70 % wt and most preferably more than 90 % wt of recurring units derived from at least one aromatic dihalocompound comprising at least one $-S(=O)_2-$ group and the diol (D) having general formula (I), as detailed above.

In another embodiment of the present invention, the poly(arylethersulfone) polymer consists essentially of recurring units derived from at least one aromatic dihalocompound comprising at least one $-S(=O)_2-$ group and the diol (D) having general formula (I), as detailed above. End chains, defects and minor constituent can enter into the microstructure of this poly(arylethersulfone)polymer without substantially modifying its properties.

For the purpose of the present invention, any aromatic dihalocompound comprising at least one $-S(=O)_2-$ group which is able to polymerize with the aromatic diol (D) is suitable.

Unlimited examples of aromatic dihalocompounds suitable to the purpose of the present invention are compounds of general formula (II) : $X-[Ar^3-SO_2-Ar^4]-[Ar^5]_n-[Ar^3-SO_2-Ar^4]_m-X$ (II) wherein n and m are independently 0, 1, 2, 3 or 4 ;

wherein X is an halogen selected from chlorine, fluorine, bromine and iodine ; wherein $Ar^3$, $Ar^4$ are equal or different from each other and are aromatic moieties of the formula :

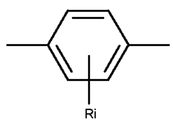

wherein $Ar^5$ is selected from the group consisting of :

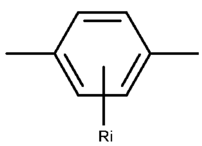

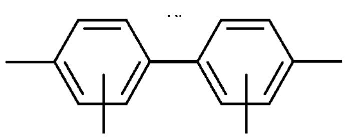

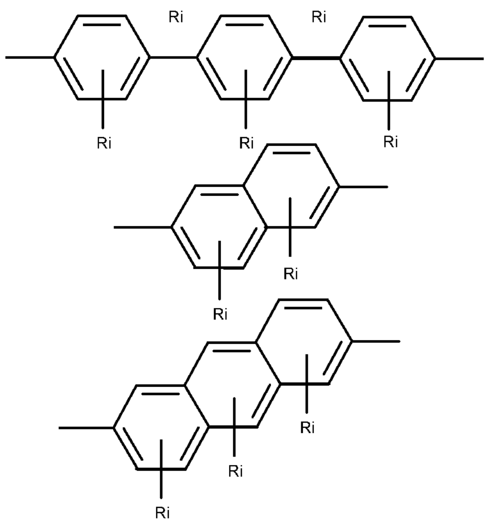

wherein Ri are independently selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and i is 0, 1, 2, 3, or 4.

In the compounds of general formula (II), n and m are preferably independently 0, 1 or 2, more preferably n and m are 0 or 1. Also, X is preferably selected from F and Cl. In addition, each Ri is preferably independently selected from the group consisting of hydrogens and halogens, more preferably all Ri's are hydrogens.

According to the present invention, the above mentioned compounds of general formula (II) may notably be one of the following molecules :

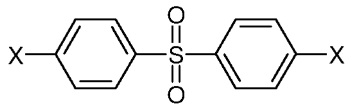

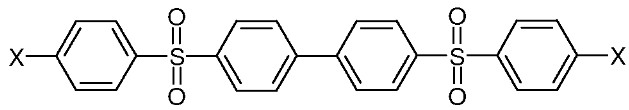

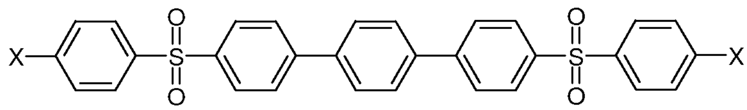

where X may be the same or different and are any halogen atoms chosen from chlorine, fluorine, bromine and iodine. The above structure may also be substituted by groups similar to the Ri described above.

In other words, the compounds of general formula (II) may be a dihalodiphenyl sulfone such as 4,4'-dichlorodiphenyl sulfone, 4,4'-difluorodiphenyl sulfone, 4,4'-dibromodiphenyl sulfone and 4,4'-diiododiphenyl sulfone or mixed derivatives. In a first embodiment, the most preferred aromatic dihalocompounds is 4,4'-dichlorodiphenyl sulfone. In a second embodiment, the most preferred aromatic dihalocompounds is 4,4'-difluorodiphenyl sulfone.

The compounds of general formula (II) may also be 4,4'-bis-(4-chlorophenylsulfonyl)biphenyl or 4,4"-bis-(4-chlorophenylsulfonyl)terphenyl.

The diol (D) comprises preferably at least one cycloaliphatic moiety (M). The term "cycloaliphatic moiety" is intended to denote any moiety being both aliphatic (i.e, not aromatic) and cyclic (i.e., where the carbon atoms are connected in a ring). The cycloaliphatic moiety (M) may comprise from 4 to 8 carbon atoms, preferably from 4 to 6 carbon atoms. It may be either unsubstituted or substituted.

As said, the cycloaliphatic moiety (M) does not comprise any heteroatoms in the ring.

In other terms, the backbone of the cycle of the cycloaliphatic moiety is made only of interconnected carbon atoms.

More than one cycloaliphatic moiety (M) can be present in diol (D). If more than one cycloaliphatic moiety (M)

is present in diol (D), they can be the same or different.

In a preferred embodiment of the invention, the diol (D) has a general formula ($D_I$):

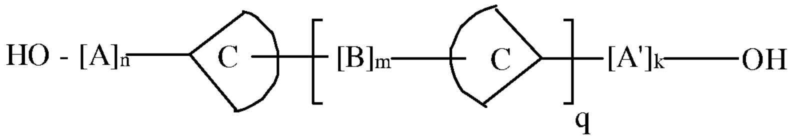

formula ($D_I$)

wherein

- A and A', equal to or different from each other and at each occurrence, is independently a bond or selected from the group consisting of divalent groups possibly comprising a halogen atom,
- B is independently a bond or selected from the group consisting of divalent groups possibly comprising a halogen atom,
- each of C, equal to or different from each other, is a cycloaliphatic group comprising at least one cycloaliphatic moiety (M) ;
- n, m, and k, equal to or different from each other, are independently an integer of 1 to 4; and q is 0 or 1.

Diol (D) may also comprise a polycyclic cycloaliphatic moiety, said polycyclic cycloaliphatic moiety comprising more than one condensed cycloaliphatic moieties (M). Typically the polycyclic cycloaliphatic moiety comprises two condensed cycloaliphatic moieties (M), three condensed cycloaliphatic moieties (M) or even four condensed cycloaliphatic moieties (M). Each condensed cycloaliphatic moiety (M) typically comprises from 4 to 8 carbon atoms, preferably from 4 to 6 carbon atoms.

It is further understood that the diol according to general formula ($D_I$) may exist in different stereochemical and regiochemical arrangements. Thus, for example, the two hydroxyl groups may have a cis or trans configuration towards each other.

Suitable diol (D) can be selected from the group consisting of:

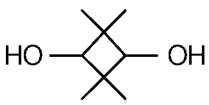

(D-1)

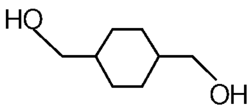

(D-2)

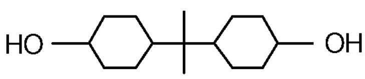

(D-3)

and

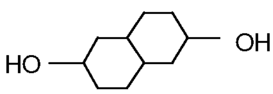

(D-4)

In another preferred embodiment of the present invention, the diol (D) is of formula (D-5), as shown below :

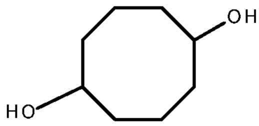

(D-5)

Diols according to formulae (D-1) to (D-5) may exist in different stereochemical arrangements. For the sake of simplicity the stereochemistry of the bonds, in particular the stereochemical arrangement of the C-OH or C-$CH_2$OH bonds in formulae (D-1) to (D-5), is not indicated in the present specification. It has to be understood that all stereoisomers, each one singly as well as their mixtures, are encompassed by each formula (D-1) to (D-5).

Thus, in the case of 2,2,4,4-tetramethyl-1,3-cyclobutanediol (CBDO), formula (D-1) encompasses the cis isomer, the trans isomer, as well as their mixtures in any proportion.

In a particular embodiment, the poly(arylethersulfone) polymer according to the present invention comprises the following recurring unit:

$$\{-[Ar^3-SO_2-Ar^4]-[Ar^5]_n-[Ar^3-SO_2-Ar^4]_m-O-Q-O-\} \qquad (III).$$

In such a case, the poly(arylethersulfone) polymer according to the present invention comprises advantageously more than 10 % wt, preferably more than 30 % wt, more preferably more than 50 % wt, still more preferably more than 70 % wt and most preferably more than 90 % wt of recurring units of formula (III). Excellent results were obtained when the poly(arylethersulfone) polymer according to the present invention consisted of recurring units of formula (IV) and (V) :

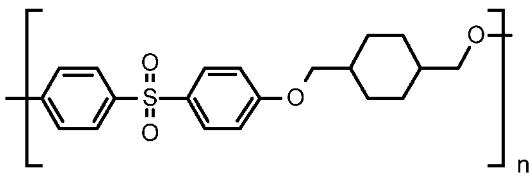

(IV)

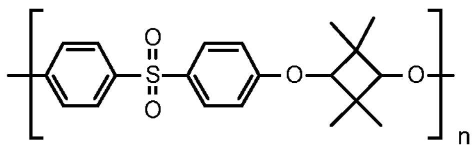

(V)

In a particular embodiment, the poly(arylethersulfone) polymer according to the present invention comprises recurring units derived from at least one aromatic dihalocompound comprising at least one -S(=O)$_2$- group and at least two diols (D) selected from the above described general formula (D-1), (D-2), (D-3) and (D-4). More preferably, the poly(arylethersulfone) polymer according to the present invention comprises recurring units derived from at least one aromatic dihalocompound comprising at least one -S(=O)$_2$- group and the two diols (D-1) and (D-2).

In another particular embodiment, the poly(arylethersulfone) polymer according to the present invention comprises recurring units derived from at least one aromatic dihalocompound comprising at least one -S(=O)$_2$- group and at least one diol (D-5).

In another embodiment of the present invention, the poly(arylethersulfone) polymer within the different embodiments can further comprise recurring units derived from an aromatic diol (AD), which is different from the diol (D). Any aromatic diol which is able to polymerize with the aromatic dihalocompound (II) is suitable to be used as aromatic diol (AD). Non limitative examples of such aromatic diols (AD) are 4,4'-biphenol (i.e. 4,4'-dihydroxybiphenyl), bisphenol A, 4,4'-dihydroxy-diphenylsulfone (also known as bisphenol S), hydroquinone, 4,4'-dihydroxy-diphenylether, alpha, alpha'-bis-(4-hydroxyphenyl)-p-diisopropylbenzene, 1,4-bis(4-hydroxyphenoxy)benzene.

A poly(arylethersulfone) polymer comprising recurring units derived from a 4,4'-dihalodiphenylsulfone and a diol selected from the group consisting of those complying with formulae (D-1) and/or (D-2) as detailed above, is especially preferred.

The poly(arylethersulfone) polymers of the present invention presents a glass transition temperature of advantageously more than 140°C, preferably more than 160°, more preferably more than 180°C, still more preferably more than 200°C, even more preferably more than 225°C and most preferably more than 250°C.

The poly(arylethersulfone) polymers of the present invention are advantageously amorphous and transparent.

The poly(arylethersulfone) polymer of the present invention may be made by a polycondensation reaction from

the aromatic dihalocompound comprising at least one -S(=O)$_2$- group, as detailed above and the diol (D) having general formula (I), as detailed above. The polycondensation reaction can be carried out according to known methods, i.e., a carbonate method ; an alkali metal hydroxide method ; or a phase transfer catalyzed method.

In one embodiment, the poly(arylethersulfone) polymers of the present invention are prepared by a polycondensation reaction which is carried out according to the carbonate method. Said carbonate method comprises contacting in a polycondensation reaction substantially equimolar amounts of the diol (D) of formula (I), as above detailed and at least one aromatic dihalocompound comprising at least one -S(=O)$_2$- group, as above detailed with an alkali metal carbonate in the presence of a solvent comprising a polar aprotic solvent.

If desired, the purity of the aromatic dihalocompound comprising at least one -S(=O)$_2$- group, as detailed above and the diol (D) having general formula (I), as detailed above, is advantageously above 97 % area as measured by Gas Chromatography.

The process carried out according to the carbonate method is conducted by contacting substantially equimolar amounts of the diol (D) of formula (I) and at least one dihalodiarylsulfone, e.g., 4,4'-dichlorodiphenyl sulfone or 4,4'-difluorodiphenyl sulfone. Excellent results were obtained when using a very large excess of the carbonate.

The alkali metal carbonate is preferably sodium carbonate, potassium carbonate, rubidium carbonate and cesium carbonate. Sodium carbonate and potassium carbonate are especially preferred. Mixtures of more than one carbonates can be used, for example, a mixture of sodium carbonate or bicarbonate and a second alkali metal carbonate or bicarbonate having a higher atomic number than that of sodium.

The use of an alkali metal carbonate having an average particle size of less than about 100 μm is particularly preferred. More preferably, an alkali metal carbonate average particle size of less than about 50 μm is used. Still more preferably, an alkali metal carbonate average particle size of less than about 30 μm is used. The use of an alkali metal carbonate having such a particle size permits the synthesis of the polymers to be carried out at a relatively lower reaction temperature with faster reaction. Sodium and potassium carbonate salts, singularly or in combination, may be used to provide polymers having desirable molecular weight characteristics. Higher molecular weight polymers may be obtained when a potassium salt is used.

The components are dissolved or dispersed in a solvent mixture comprising a polar aprotic solvent. If desired, an additional solvent can be used together with the polar aprotic solvent which forms an azeotrope with water, whereby water formed as a byproduct during the polymerization may be removed by azeotropic distillation continuously throughout the polymerization. In general, the reaction medium is maintained in substantially anhydrous conditions during the polymerization by removing water continuously from the reaction mass. Water can be removed by distillation or with the azeotrope-forming solvent as an azeotrope, as described above.

For the purpose of the present invention, the term "additional solvent" is understood to denote a solvent different from the reactants and the products of a given reaction.

The polar aprotic solvents employed are those generally known in the art and widely used for the manufacture of poly(arylethersulfones). For example, the sulfur containing solvents known and generically described in the art as dialkyl sulfoxides and dialkylsulfones wherein the alkyl groups may contain from 1 to 8 carbon atoms, including cyclic alkyliden analogs thereof, are disclosed in the art for use in the manufacture of poly(arylethersulfones). Specifically, among the sulfur-containing solvents that may be suitable for the purposes of this invention are dimethylsulfoxide, dimethylsulfone, diphenylsulfone, diethylsulfoxide, diethylsulfone, diisopropylsulfone, tetrahydrothiophene-1, 1-dioxide (commonly called tetramethylene sulfone or sulfolane) and tetrahydrothiophene-1-monoxide and mixtures thereof. Nitrogen-containing polar aprotic solvents, including dimethylacetamide, dimethylformamide and N-methyl pyrrolidinone (i.e., NMP) and the like have been disclosed in the art for use in these processes, and may also be found useful in the practice of this invention.

The additional solvent that forms an azeotrope with water will generally be selected to be inert with respect to the monomer components and polar aprotic solvent. Suitable azeotrope-forming solvents for use in such polymerization processes include aromatic hydrocarbons such as benzene, toluene, xylene, ethylbenzene, chlorobenzene and the like.

The azeotrope-forming solvent and polar aprotic solvent are typically employed in a weight ratio of from about 1 : 10 to about 1 : 1, preferably from about 1 : 5 to about 1 : 3.

Generally, after an initial heat up period, the temperature of the reaction mixture will be maintained in a range of advantageously from 150-220°C for about 3 to 8 hours.

Typically, if the reaction is conducted at atmospheric pressure, the boiling temperature of the solvent selected usually limits the temperature of the reaction. The reaction may be conveniently carried out in an inert atmosphere, e. g., nitrogen, at atmospheric pressure, although higher or lower pressures may also be used.

Preferably, after the desired molecular weight has been reached, the polymer is treated with an activated aromatic halide or an aliphatic halide such as methyl chloride or benzyl chloride, and the like. Such treatment of the polymer converts the terminal hydroxyl groups into ether groups which stabilize the polymer. The polymer so treated has good melt and oxidative stability.

In another embodiment, the poly(arylethersulfone) polymers of the present invention are prepared by a polycondensation reaction which is carried out according to the alkali metal hydroxide method. While the carbonate method for preparing the polymer of this invention is simple and convenient, in some cases products of higher molecular weight can be made by said alkali metal hydroxide method. In the alkali metal hydroxide method, a double alkali metal salt of a dihydric phenol is contacted with a dihalobenzenoid compound in the presence of a polar aprotic solvent, e. g. a sulfur containing solvent such as dimethylsulfoxide, dimethylsulfone, diphenylsulfone, diethylsulfoxide, diethylsulfone, diisopropylsulfone, tetrahydrothiophene-1, 1-dioxide (commonly called tetramethylene sulfone or sulfolane) and tetrahydrothiophene-1-monoxide and mixtures thereof under substantially anhydrous conditions.

In yet another embodiment, the poly(arylethersulfone) polymers of the present invention are prepared by a polycondensation reaction which is carried out according to the phase transfer catalyzed method. While the carbonate method and the alkali metal hydroxide method are normally conducted in the presence of polar aprotic solvents, the phase transfer catalyzed method can be carried out in non-polar solvents due to the employment of a phase transfer catalyst, facilitating incorporation of the salt of an aromatic bishydroxy monomer, (e.g. the diol (D) of formula (I)) in the organic phase.

The phase transfer catalyzed method is known in the prior art and can be conducted by contacting a substantially equimolar reaction of a double alkali metal salt of a dihydric phenol with a dihalobenzenoid compound, except that the presence of liquid organic sulfone or sulfoxide solvents and cosolvents under substantially anhydrous conditions are not required and phase transfer catalysts are used for this reaction.

The poly(arylethersulfone) can be recovered by methods well known and widely employed in the art such as, for example, coagulation, solvent evaporation and the like.

The resulting poly(arylethersulfone) polymer may be isolated by devolatilization of the reaction mixture after separation of salts with or without first adding additional solvent(s) such as sulfolane or a mixture of sulfolane with another solvent, optionally the azeotrope solvent, to fully dissolve any polymer and cause the precipitation of the metal halide. Alternatively, the polymer may be isolated by precipitation and/or coagulation by contacting the reaction mixture with a non-solvent for the polymer such as an alcohol or water, or mixtures thereof. The precipitate/coagulate may be rinsed and/or washed with demineralized water prior to drying under reduced pressure and elevated temperature. The resulting precipitate may be further processed by extruding and pelletizing. The pelletized product may subsequently be subjected to further melt processing such as injection moulding and/or sheet extrusion. The conditions for moulding, extruding, and thermoforming the resulting poly(arylethersulfone) are well known in the art.

The poly(arylethersulfone) polymer according to the present invention feature all the benefit of the currently sold polysulfones while also unexpectedly featuring a very good resistance to UV light. In addition, the diol (D) used to prepare the poly(arylethersulfone) polymer according to the present invention do not show any endocrine activity and are therefore perfect candidates for the preparation of polymers to be used in applications requiring contact with water, food, drugs and/or blood.

The present invention also concerns polymer compositions that include at least one of the invented polymers, and at least one other ingredient. Said other ingredient can be another poly(arylethersulfone) polymer. It can also be a polymer other than a poly(arylethersulfone) polymer such as polyvinylpyrrolidone and polyethylene glycol. It can also be a non polymeric ingredient such as a solvent, a filler, a lubricant, a mould release agent, an antistatic agent, a flame retardant, an anti-fogging agent, a matting agent, a pigment, a dye and an optical brightener.

An example of such polymer composition is a dope solution suitable for the preparation of membranes. A dope solution is intended to denote a solution that is used to prepare a membrane, i.e. by casting, spinning, etc.

The poly(arylethersulfone) polymer of the composition according to the present invention has the same characteristics as the poly(arylethersulfone) polymer according to the present invention, in all its embodiments, as above detailed.

The polymer composition comprise advantageously more than 1 wt. %, preferably more than 10 wt. %, still more preferably more than 50 wt. %, and the most preferably more than 90 wt. %, related to the total weight of the composition, of the poly(arylethersulfone) polymer.

The poly(arylethersulfone) polymer or the polymer composition of the present invention can then be fabricated, e.g. by moulding (injection moulding, extrusion moulding, blow moulding), calendaring or melt spinning into a desired shaped article.

The Applicant has surprisingly found that the poly(arylethersulfone) polymer or the polymer composition of the present invention as detailed above, exhibiting excellent properties which are useful in providing high performance polymer membranes.

In a preferred embodiment of the present invention, the poly(arylethersulfone) polymer or the polymer composition of the present invention is used for fabrication of membranes.

The invention also concerns an article comprising the poly(arylethersulfone) polymer as above described or the polymer composition as above described.

The poly(arylethersulfone) polymer and the polymer composition comprised in the article according to the present invention have the same characteristics respectively as the poly(arylethersulfone) polymer and the polymer

composition according to the present invention, in all their embodiments, as above detailed.

The article may be a membrane. Membranes suitable for the purpose of the invention include, without limitation, isotropic or anisotropic membranes, porous or non-porous membranes, composite membranes, or symmetric or non-symmetric membranes. Such membranes may be in the form of flat structures, corrugated structures, (such as corrugated sheets), tubular structures, or hollow fibers. The membranes according to the present invention can be manufactured using any of the conventionally known membrane preparation methods, for example, by a solution casting or solution spinning method.

Non limitative examples of membrane applications include water purification, wastewater treatment, pharmaceutical production, blood purification, in particular hemodialysis and a variety of industrial process separations, such as food and beverage processing, electropaint recovery and gas separation.

The above described article may also be a food contact article such as a plumbing article such as a fitting, a valve, a manifold or a faucet, a food tray, a water bottle or a baby bottle, a cookware.

The above described article may also be an electronic part.

The above described article may also be a housing or cover for a mobile electronic device.

The above described article may also be a medical tray or an animal cage.

The Applicant has surprisingly found that the poly(arylethersulfone) polymer or the polymer composition of the present invention as detailed above, exhibiting excellent UV properties which is useful in optical applications.

The above described article may also be optical articles such as notably sunglass lenses, eyeglass lenses, optical lenses, optical discs.

The Applicant has surprisingly found that the poly(arylethersulfone) polymer or the polymer composition of the present invention as detailed above, exhibiting excellent weathering performance which can be used for manufacturing of sheets and films.

Another object of the invention is a method for coating substrates comprising using the poly(arylethersulfone) polymer or the polymer composition of the present invention as detailed above.

The choice of substrates is not particularly limited. Such coatings may be useful for protecting substrates such as notably metals such as steel, in particular stainless steel, aluminum, copper, and other metals in applications such as food and beverage can coatings, marine-hull protection, aerospace, automotive, wire coating, electronics, optical and plastics.

Should the disclosure of any patents, patent applications, and publications which are incorporated herein by reference conflict with the description of the present application to the extent that it may render a term unclear, the present description shall take precedence.

The disclosure will now be illustrated with working examples, which are intended to illustrate the working of disclosure and not intended to take restrictively to imply any limitations on the scope of the present disclosure.

## EXAMPLES

### Raw materials

Udel® polysulfone polymer (P3500) commercially available from SOLVAY SPECIALTY POLYMERS USA, LLC was used for preparing membrane and films for UV exposure and contact angle measurements. Udel® polysulfone polymer (P1700) commercially available from SOLVAY SPECIALTY POLYMERS USA, LLC was used for mechanical property measurements.

RADEL® R PPSU (R5100) commercially available from SOLVAY SPECIALTY POLYMERS USA, LLC.

### Polymerization of cyclohexanedimethanol (CHDM - (D-2)) with 4,4-difluorodihenlsulhone (DFDPS) - Examples 1, 2 and example 4

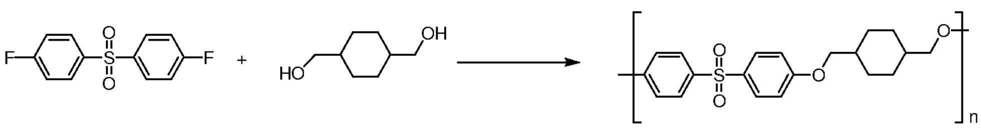

**Example 1 :** DFDPS (25.42 g), CHDM (14.42 g), anhydrous potassium carbonate (avg. particle size 32 µm) (27.64 g), and anhydrous sulfolane (83.64 g) were charged to a 250 ml 4-necked flask equipped with an overhead mechanical stirrer, nitrogen dip-tube, thermocouple, and a Dean-Stark trap with condenser. The reaction mixture was stirred and temperature was raised to 210-215°C and held for 3-3.5 hours. The water was collected in the trap. The reaction

mixture was diluted with MCB/sulfolane and filtered to remove salts. The filtered solution was coagulated into rapidly stirred methanol and re-slurried once with methanol. The coagulum was re-slurried with hot water, filtered, dried in a vacuum oven at 120°C.

The resulting polymer had molecular weights, as measured by GPC methods of : MW - 55,367 ; Mn - 22,702, and a Tg, as measured by DSC methods (2nd heat) of 150.58°C.

The procedure was repeated.

**Example 2 :** DFDPS (63.56 g), CHDM (36.05 g), anhydrous potassium carbonate (avg. particle size 32 μm) (69.10 g), and anhydrous sulfolane (166.42 g) were charged to a 500 ml 4-necked resin kettle equipped with an overhead mechanical stirrer, nitrogen dip-tube, thermocouple, and a Dean-Stark trap with condenser. The reaction mixture was stirred and temperature was raised to 210-215°C and held for 7 hours. The water was collected in the trap. At the end of the polymerization methyl chloride was bubbled through the reaction mixture for 30 minutes. The reaction mixture was diluted with NMP/sulfolane and filtered to remove salts. The filtered solution was coagulated into rapidly stirred methanol and re-slurried once with methanol. The coagulum was re-slurried with hot water, filtered, dried in a vacuum oven at 120°C.

The resulting polymer had molecular weights, as measured by GPC methods of : Mw - 84,178 ; Mn - 31,062, % fraction $M^{<3000}$ is 0.51 and a Tg, as measured by DSC (2nd heat) of 169°C.

**Example 4 :** The same procedure was followed as in example 2 except that DFDPS (152.48 g, 0.6 mol), CHDM (86.48 g, 0.6 mol), and anhydrous potassium carbonate (165.77 g, 1.2 mol) were used. The reaction mixture was held at 210-215°C for ?? hours until the reaction mixture became viscous. Once the desired molecular weight was achieved only sulfolane (300 g) was charged and the reaction mixture was terminated by bubbling methyl chloride for 30 min. The reaction mixture, optionally filtered to remove salts, was coagulated directly into rapidly stirred water directly followed by repeated water washes to reduce such salts. The polymer was dried in a vacuum oven at 120°C overnight.

The resulting polymer had molecular weights, as measured by GPC methods of : Mw - 58,546 ; Mn - 23,365, % fraction $M^{<3000}$ is 1.61 and a Tg, as measured by DSC (2nd heat) of 180°C.

**Polymerization of tetramethylcyclobutanediol (CBDO) with DFDPS - Example 3, 5, 6 and comparative example 7**

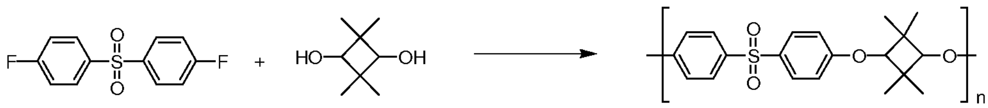

**Example 3 :** DFDPS (25.42 g), CBDO (14.42 g), anhydrous potassium carbonate (avg. particle size 32 μm) (27.64 g), DMAc (66.7 g), and toluene (25 g) were charged to a 250 ml 4-necked flask equipped with an overhead mechanical stirrer, nitrogen dip-tube, thermocouple, and a Dean-Stark trap with condenser. The reaction mixture was stirred and temperature was raised to reflux and held 7 hours. The water was collected in the trap. The reaction temperature was raised to 155-160°C and held until the reaction mixture became viscous (~7-8 hours). The polymerization was terminated by bubbling methyl chloride for 30 min. The reaction mixture was diluted with NMP and filtered to remove salts. The filtered solution was coagulated into rapidly stirred methanol and re-slurried once with methanol. The coagulum was re-slurried with hot water, filtered, and dried in a vacuum oven at 120°C.

The resulting polymer had molecular weights, as measured by GPC of : Mw - 81,869 ; Mn - 32,044, and a Tg, as measured by DSC (2nd heat) of 258.75°C.

**Example 5 :** DFDPS (127.13 g, 0.5 mol), CBDO (72.11g, 0.5 mol), anhydrous potassium carbonate (avg. particle size 32 μm) (138.21 g, 1.0 mol), DMSO (332.85 g), and chlorobenzene (110.95 g) were charged to a 1L-resin kettle equipped with an overhead mechanical stirrer, nitrogen-inlet, thermocouple, and a Vigroux column with a modified Barrrett trap and a condenser. The reaction mixture was stirred and temperature was raised to reflux and held until most of the water was distilled off. The water was collected in the trap. The reaction temperature was raised to 170°C and held until the reaction mixture became viscous (~3 hours). Once the desired molecular weight was achieved chlorobenzene was added and the reaction mixture was cooled to ~120°C followed by bubbling methyl chloride for 30 min. The reaction mixture was filtered through a 2.7 μm filter pad using a pressure filter to remove salts. The filtered solution was coagulated into rapidly stirred methanol and re-slurried once with methanol. The white fibrous polymer was washed two times with water followed by a methanol wash. The polymer was dried in a vacuum oven at 120°C overnight.

The resulting polymer had molecular weights, as measured by GPC of : Mw - 94,242 ; Mn - 42,860, % fraction $M^{<3000}$ is 0.32 and a Tg, as measured by DSC (2nd heat) of 249°C.

**Example 6 :** The same procedure was followed as in example 5 except that DFDPS (128.40 g, 0.505 mol), CBDO (72.11 g, 0.5 mol), and anhydrous potassium carbonate (avg. particle size 32 μm) (138.21 g, 1.0 mol) were used. The reaction mixture was now held at 167 - 172°C for about 4 hours. Additionally, the reaction mixture was diluted by 432 g of a mixture of DMSO and MCB (1:1) before filtering through a 2.7 μm filter pad and after filtering additionally washed with a 200 g mixture of hot DMSO and MCB (1:1).

The resulting polymer had molecular weights, as measured by GPC of : Mw - 113,487 ; Mn - 42,525, % fraction $M^{<3000}$ is 0.73 and a Tg, as measured by DSC (2nd heat) of 247°C.

**Example 7** - DCDPS (4.04 g), CBDO (2.0 g), anhydrous potassium carbonate (avg.particle size 32 μm) (3.95 g), and sulfolane (8.9 g) were charged to a 100 ml 3-necked flask equipped with an overhead mechanical stirrer, nitrogen dip-tube, thermocouple, and a Dean-Stark trap with condenser. The reaction mixture was stirred and temperature was raised to 210°C and held 20 hours. During the reaction, white crystals were accumulated on the condenser and it was CBDO monomer due to its boiling point. The condenser was heated by a heatgun to put the monomer into the solution. After 20 hours polymerization time, the mixture was diluted with NMP and filtered to remove salts. The filtered solution was coagulated into rapidly stirred methanol and re-slurried once with methanol. The coagulum was re-slurried with hot water, filtered, and dried in a vacuum oven at 120°C.

The resulting polymer had molecular weights, as measured by GPC of : Mw - 14,640; Mn - 6,119, % fraction $M^{<3000}$ is 11.29 and a Tg, as measured by DSC (2nd heat) of 182°C. A polymer film could not be manufactured from this low molecular weight polymer.

**Polymerization of a mixture of cyclohexanedimethanol (CHDM - (D-2)) and tetramethylcyclobutanediol (CBDO - (D-1)) with 4,4-difluorodiphenylsulphone (DFDPS)**

**Example 8 - CHDM/CBDO (50/50)** : DFDPS (141.24 g, 0.56 mol), CBDO (39.66 g, 0.275 mol), CHDM (39.66g, 0.275 mol), and anhydrous potassium carbonate (228 g, 1.65 mol) were charged to a 1L-resin kettle equipped with an overhead mechanical stirrer, nitrogen-inlet, thermocouple, and a modified Barrett trap with a condenser. The powders were purged with nitrogen for 15 minutes, followed by addition of DMSO (366.1 g) and chlorobenzene (122 g). The reaction mixture was stirred and temperature was raised to reflux (~ 164°C) and held until most of the water was distilled off. The water was collected in the trap. The reaction temperature was raised to 165 - 173°C and held until the reaction mixture became viscous (~8 hours). Once high Mw was achieved, chlorobenzene (300 g) was added and the reaction mixture was cooled to ~120°C followed by bubbling methyl chloride for 30 min. The reaction mixture was further diluted with 382 g MCB and filtered through a 2.7 μm filter pad using a pressure filter to remove salts. The filtered polymer solution was coagulated into rapidly stirred methanol followed by a reslurry into methanol. The white fibrous polymer was washed two times with water followed by a methanol wash. The polymer was dried in a vacuum oven at 120°C overnight.

The resulting polymer had molecular weights, as measured by GPC of : Mw - 81,862 ; Mn - 31,399, % fraction $M^{<3000}$ is 3.66 and a Tg, as measured by DSC (2nd heat) of 212°C.

**Example 9 - CHDM/CBDO (70/30)** : The same procedure was followed as in example 8 except that DFDPS (154.07 g, 0.61 mol), CBDO (25.96 g, 0.18 mol), CHDM (60.57 g, 0.42 mol), and anhydrous potassium carbonate (248.77 g, 1.8 mol) were used and DMSO (399.42 g) and chlorobenzene (133.14 g) were now added after purging the powders with nitrogen for 15 minutes. The reaction mixture was now held at reflux (~ 164°C) until most of the water was distilled off and collected in the trap. The reaction temperature was raised held at 165-170°C for about 11 hours. The resulting polymer had molecular weights, as measured by GPC of : Mw - 68,097 ; Mn - 26,423, % fraction $M^{<3000}$ is 1.52 and a Tg, as measured by DSC (2nd heat) of 201°C.

**Polymerization of *cis*-1,S-Cyclooctanediol (CODO) with 44-difluorodihenlsulhone (DFDPS)**

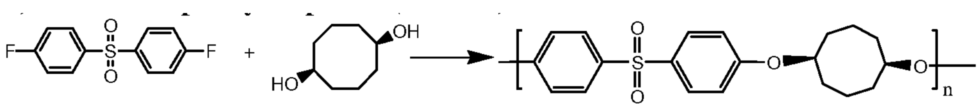

**Example 10 :** DFDPS (1.80 g), CODO (1.0 g), anhydrous potassium carbonate (avg.particle size 32 μm) (1.20 g), and sulfolane (7.5 g) were charged to a 100 ml 3-necked flask equipped with an overhead mechanical stirrer, nitrogen dip-tube, thermocouple, and a Dean-Stark trap with condenser. The reaction mixture was stirred and temperature

was raised to 210°C using an oil bath. The polymerization carried out at 210°C for 20 hours and the solution became a viscous mixture. This mixture was allowed to cool to 100-120°C and diluted with NMP. Then the diluted solution was filtered to remove salts and the filtered solution was coagulated into rapidly stirred methanol and re-slurried once with methanol. The coagulum was re-slurried with hot water, filtered, and dried in a vacuum oven at 120°C.
The resulting polymer had molecular weights, as measured by GPC of : Mw -34,449; Mn - 11,673, % fraction $M^{<3000}$ is 4.22 and a Tg, as measured by DSC (2nd heat) of 163°C.
**Example 11 :** The same procedure was followed as in example 10 except that DFDPS (1.85 g), CODO (1.0), and anhydrous potassium carbonate (1.20 g) were used.
The resulting polymer had molecular weights, as measured by GPC of : Mw -4,952; Mn - 3,040, % fraction $M^{<3000}$ is 35 and a Tg, as measured by DSC (2nd heat) of 126.4°C. A polymer film could not be manufactured from this low molecular weight polymer.

The following characterizations carried out on the materials of the Examples are indicated hereinafter :

***Molecular weight measurements by a GPC method***

The GPC method was performed using two 5μm mixed-D Size Exclusion Chromatography columns from Polymer Laboratories at room temperature. A Waters 2695 separation module with pump and autoinjector was used. A flow rate of 1.5 ml/min was maintained. The polymer solution, 25-50 mg of the polymer in 10 ml methylene chloride was prepared. 15 μl of the polymer solution was injected. Methylene chloride was used as the mobile phase. An ultraviolet detector at wavelength of 254 nm was used to obtain chromatogram. Waters software (Empower Pro GPC) was used for calibration using polystyrene standards (Easycal PS2 from Agilent), data acquisition, and data analysis. Peak integration start and end points were manually determined from significant difference on global baseline.

***Physical property measurements***

DSC measurements were done according to ASTM D3418-03, E1356-03, E793-06, E794-06 on TA Instruments Q20 with nitrogen as carrier gas (99.998 % purity, 50 mL/min). Temperature and heat flow calibrations were done using indium. Sample size was 2 to 7 mg.
The heat cycles were :

1st heat cycle : 50.00°C to 300°C at 20.00°C/min, isothermal at 300 or 350°C for 1 min.
1st cool cycle : 300°C to 50.00°C at 20.00°C/min,
2nd heat cycle : 50.00°C to 300°C at 20.00°C/min.

The glass transition temperature was measured on the polymeric material powder from the 2nd heat thermogram according to the ASTM D3418, by drawing a baseline before the transition and a baseline after the transition : the Tg is the temperature at half height between these two lines.
For examples 1 and 2, the upper temp was 350°C instead of 300°C.

***UV Stability Measurements***

*UV Weathering Measurements*

Polymer films were casted from a 20 % NMP solution of the poly(arylethersulfone) polymers of examples 2 and 5, the commercial Udel® polysulfone polymer and Radel® polymer, at room temperature on clean glass plates. A BYK Gardener 6 mil draw bar was used for casting. The glass plates were placed in a vacuum oven at 120°C and dried under vacuum for 24 hours. The films were carefully lifted from glass plates, turned over and further dried for 24 hours at 120°C in a vacuum oven. Before testing, all the films were checked for residual NMP by GC to ensure solvent removal. The residual NMP ranged from 16 - 1284 ppm. Consequently, 100 mm x 10 mm x 30 μm strips of said film were prepared.
For example 10, polymer films were prepared by casting a 24 % wt/wt DMF polymer solution onto a glass plate that was preheated to 70°C using a 15 mil draw bar (BYK Gardener). The films were then dried at 120°C in a vacuum oven for 48 hours, checked for residual solvent using FT-IR (carbonyl band for DMF at ca. 1680 $cm^{-1}$), and placed into the weatherometer for exposure to ultraviolet light and were then exposed to the conditions as detailed below.
In a typical weathering experiment, the experimental data is showing the relationship between optical clarity (% Transmission) and UV exposure time.
Said weathering experiments were carried out using an Atlas ci4000 xenon weatherometer equipped with a Type "S" borosilicate inner filter and a soda lime outer filter. The cut-off filters eliminated all wavelengths > 340 nm. All

weathering cycles were set to an irradiance of 0.30 w/m$^2$, panel temperature of 55°C, chamber temperature of 38°C, and a relative humidity of 55 %. All other variables were controlled in accordance with ASTM G1555-4.

For examples 2, 5 and the commercial Udel® polysulfone polymer and Radel® polymer, the prepared 100 mm x 10 mm x 30 μm strips of said polymer film was first mounted to metal specimen holders (Atlas SL-3T). The mounted samples were then exposed to the conditions as detailed above for an extended period of time (see Table 1). Throughout this time period, in particular after 24, 29, 48, 72, 84 and 144 hours respectively, samples of exposed film were removed and transmission spectra were measured. Transmission spectra were collected using a Perkin Elmer lambda 950 UV/Vis spectrophotometer set to a slit width of 2 nm while scanning from 200 nm to 600 nm. %Transmission at 350 nm (% T, herein after) was recorded as a function of UV exposure time, % loss in transmission was calculated accordingly. The experimental results are summarized in Table 1. The Applicant has surprisingly found that 100 mm x 10 mm x 30 μm strips of the films of example 2 and 5 show no yellowing upon UV exposure even after 144 hours of UV exposure and that a film of example 10 show no yellowing upon UV exposure even after 84 hours of UV exposure.

*Tensile Strength (MPa) Measurements*

The tensile strength (MPa) properties on said films made from a 20 % NMP solution of the poly(arylethersulfone) polymers of examples 2 and 5, the commercial Udel® polysulfone polymer and Radel® polymer, as detailed above, were tested according to ASTM 882-10. The thickness of films varied from 35 to 40 μm. The width of the film samples were 10 mm. A 25 mm/min cross-head speed was used. The gage length of films use as control (before UV exposure) was 50 mm, while it was 30 mm for films after 72 hours of UV exposure. The experimental results are summarized in Table 1.

***Contact Angle measurements***

The polymer films, as described above, casted from a 20 % NMP solution of the poly(arylethersulfone) polymers of examples 2, 5 and the commercial Udel® polysulfone polymer still supported on the clean glass plates, after drying in a vacuum oven at 120°C, were cooled to room temperature in a dry box. Precautions were taken to avoid touching the film surface. DSA20 Expert Easy Drop Standard System by Kruss GmbH was used using sessile drop method. Ultrapure water (15 mho) was used. A 3 μl drop volume was deposited on to clean glass plate supported film surface. Replicate contact angle measurements and the data were averaged. The experimental results are summarized in Table 1.

***Water Uptake Measurements***

The polymer films, as described above, casted from a 20 % NMP solution of the poly(arylethersulfone) polymers of examples 2, 5 and the commercial Udel® polysulfone polymer after being removed from the glass plates were placed in deionized water. The increase in mass of the film stored in water is periodically measured and an average water uptake was calculated. The test was performed for a period of 24 hrs. The experimental results are summarized in Table 1.

***Water Flux Rate***

Porous membranes were formed by casting a 20 %w/w solution (in what??) of the poly(arylethersulfone) polymers of examples 2 and 5 and the commercial Udel® polysulfone polymer onto a glass plate at 40°C using a 1mil BYK Gardner draw bar. The glass plate was then immediately immersed into a water bath (at 40°C) to form a porous membrane by phase inversion. Comparative water flux data were obtained using an Amicon test cell connected to a water reservoir, which could be pressurized with nitrogen ranging from 10 to 40 psi. The experimental results are summarized in Table 1.

The Applicant has found that SEM images (i.e. obtained by using a Evex desktop SEM instrument at 500 and 1500 magnification) of said porous membranes, defined above, made from the poly(arylethersulfone) polymers of examples 2 and 5, show that pore structure of said porous membranes are comparable to the pore structure of the Udel® polysulfone polymer based membranes casted under similar conditions.

**Table 1**

| **Examples (Ex.)** | **2** | **5** | **10** | **Udel® polysulfone polymer** | **Radel® PPSU polymer** |
|---|---|---|---|---|---|
| ***UV stability properties*** | | | | | |
| *UV Weathering Measurements* | | | | | |

(continued)

| Examples (Ex.) | 2 | 5 | 10 | Udel® polysulfone polymer | Radel® PPSU polymer |
|---|---|---|---|---|---|
| ***UV stability properties*** | | | | | |
| % T before UV exposure (T0) | 81 | 86 | 73 | 80 | 80 |
| % T after 24 h of UV exposure (T24) | 79 | 81 | | 50 | 13 |
| % T after144 h of UV exposure (T144) | 74 | 70 | 66 | 41 | 8 |
| % loss of transmisson after 24 h of UV exposure {([T0] - [T24])/ [T0]} x 100% | 2 | 5 | | 37 | 84 |
| % loss of transmission after 144 h of UV exposure {([T0] - [T144])/ [T0]} x 100% | 8 | 19 | 10 | 49 | 90 |
| *Tensile Strength (MPa) Measurements* | | | | | |
| Tensile Strength (MPa) before UV exposure (Tens 0) | 70.2 | 63.4 | | 82.8 | 65.9 |
| Tensile Strength (MPa) after 72 hours of UV exposure (Tens 72) | 51.1 | 41.6 | | 18.3 | 21.7 |
| % reduction {([Tens. 0] - [Tens. 72])/ [Tens. 0]} x 100 % | 27 | 34 | | 78 | 68 |
| ***Contact Angle measurements*** | | | | | |
| Angle degrees (degrees) | 96 | 88 | | 95 | |
| ***WaterUptake measurements*** | | | | | |
| % water uptake (% w/w of original dry film) | 2.62 | 3.44 | | 4.27 | |
| ***Water Flux Rate measurements*** | | | | | |
| Flux (L/($m^2$ x h x bar) at 10 psi | 9 | 26 | | 8 | |
| Flux (L/($m^2$ x h x bar) at 20 psi | 10 | 43 | | 18 | |
| Flux (L/($m^2$ x h x bar) at 30 psi | 10 | 242 | | 129 | |
| Flux (L/($m^2$ x h x bar) at 40 psi | 11 | 1406 | | 1323 | |

***Mechanical property measurements***

The poly(arylethersulfone) polymers of examples 4, 5, 8 and the commercial Udel® polysulfone polymer were compression molded into 4 in x 4 in x 0.125 in plaques. The 4 in x 4 in x 0.125 in compression molded plaques of said polymers were machined into Type V ASTM tensile specimens and these specimens of the various polymers were subjected to tensile testing according to ASTM method D638. The testing speed was 0.5"/min.

Izod impact testing was conducted on notched samples with a notch radius ranged from 0.398 to 0.402" and pendulum capacity of 2 ftlb according to ASTMD256.

All mechanical testing was performed at ambient conditions.

The experimental results are summarized in Table 2.

**Table 2**

| Examples (Ex.) | 4 | 5 | 8 | Udel® polysulfone polymer |
|---|---|---|---|---|
| Izod Impact (ftxlb/in) | 3.63 | 1.71 | 2.12 | 2.36 |
| Tensile Strength at Yield (psi) | 10,900 | 10,200 | 10,600 | 11,400 |
| Tensile Elongation at Yield (%) | 9.1 | 12.0 | 11.0 | 5.7 |
| Tensile Strength at Break (psi) | 8,600 | 9,570 | 9,000 | 6,450 |

(continued)

| Examples (Ex.) | 4 | 5 | 8 | Udel® polysulfone polymer |
|---|---|---|---|---|
| Nominal Tensile Strain at break (in) | 7.5 | 13.0 | 16.0 | 42.0 |
| Modulus of Elasticity (ksi) | 256 | 281 | 275 | 390 |

## Claims

**1.** A poly(arylethersulfone) polymer consisting essentially of recurring units derived from the direct reaction from at least one aromatic dihalocompound comprising at least one $-S(=O)_2-$ group and at least one diol (D) having general formula (I)

HO-Q-OH (I)

wherein Q is a group comprising from 4 to 30 carbon atoms, preferably from 8 to 15 which comprises at least one cycloaliphatic moiety (M), with the proviso that said cycloaliphatic moiety (M) does not comprise any heteroatoms in the ring, and said poly(arylethersulfone) polymer has a number average molecular weight ($M_n$) of above 8 000.

**2.** The poly(arylethersulfone)polymer according to claim 1, wherein the aromatic dihalocompound comprising at least one $-S(=O)_2-$ group is a compound of general formula (II) :

$X-[Ar^3-SO_2-Ar^4]-[Ar^5]_n-[Ar^3-SO_2-Ar^4]_m-X$ (II)

wherein n and m are independently 0, 1, 2, 3 or 4 ;
wherein X is an halogen selected from chlorine, fluorine, bromine and iodine ; wherein $Ar^3$, $Ar^4$ are equal or different from each other and are aromatic moieties of the formula :

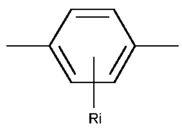

wherein $Ar^5$ is selected from the group consisting of:

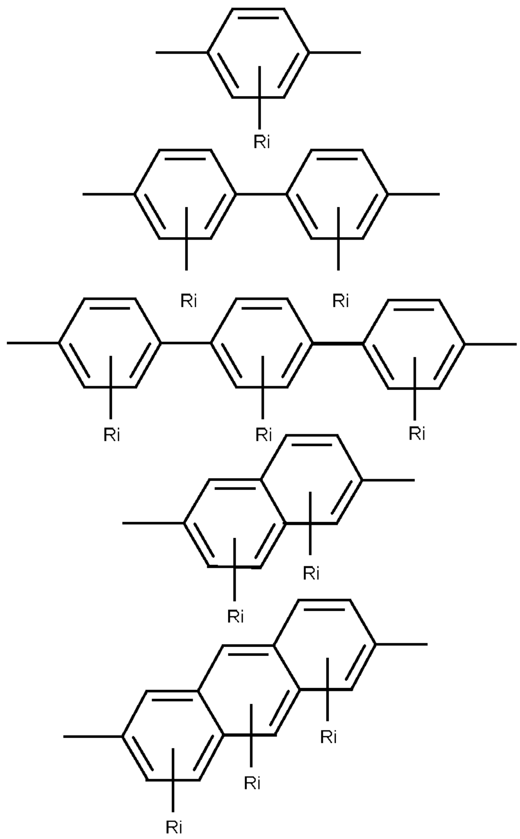

wherein each Ri is independently selected from the group consisting of:
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and i is 0, 1, 2, 3 or 4.

**3.** The poly(arylethersulfone)polymer according to claim 2, wherein the compound of general formula (II) is selected from 4,4'-dichlorodiphenyl sulfone and 4,4'-difluorodiphenyl sulfone.

**4.** The poly(arylethersulfone)polymer according to any one of claims 1 to 3, wherein the at least one diol (D) is selected from the group consisting of those complying with formulae (D-1), (D-2), (D-3) and (D-4) :

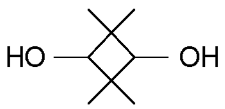

(D-1)

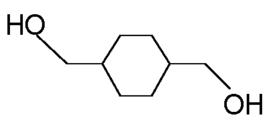

(D-2)

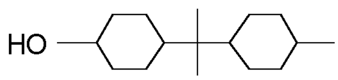

(D-3)

and

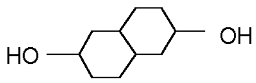

(D-4)

5. The poly(arylethersulfone)polymer according to any one of claims 1 to 3, wherein the at least one diol (D) is of formula (D-5):

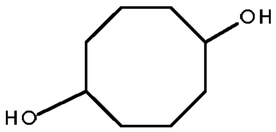

(D-5)

6. The poly(arylethersulfone)polymer according to any one of claims 1 to 5, wherein the number average molecular weight ($M_n$) is equal to or below 120000.

7. A method of preparing the poly(arylethersulfone) polymer according to anyone of claims 1 to 6.

8. A polymer composition comprising the poly(arylethersulfone) polymer according to anyone of claims 1 to 6, and at least one other ingredient chosen from a polymer, a solvent, a filler, a lubricant, a mould release agent, an antistatic agent, a flame retardant, an anti-fogging agent, a matting agent, a pigment, a dye and an optical brightener.

9. The polymer composition according to claim 8, **characterized in that** it is a dope solution suitable for preparation of membranes.

10. An article comprising the poly(arylethersulfone) polymer according to anyone of claims 1 to 6.

11. The article according to claim 10, **characterized in that** it is a membrane which is selected from the group consisting of isotropic or anisotropic membranes, porous or non-porous membranes, composite membranes, or symmetric or non-symmetric membranes.

12. The article according to claim 11 wherein said membrane is in a configuration selected from the group consisting of a flat structure, a corrugated structure, a tubular structure and a hollow fiber.

13. The article according to claims 11 or 12 wherein said membrane is a hemodialysis membrane.

14. The article according to claim 10, **characterized in that** it is a food contact article such as a food tray, a water bottle or a baby bottle.

**Patentansprüche**

1. Poly(arylethersulfon)polymer, das im Wesentlichen aus Wiederholungseinheiten, die aus der direkten Reaktion wenigstens einer aromatischen Dihalogenverbindung, die wenigstens eine $-S(=O)_2$-Gruppe umfasst, und wenigstens einem Diol (D) mit der allgemeinen Formel (I) abgeleitet sind, besteht,

HO-Q-OH (I)

wobei Q eine Gruppe ist, die von 4 bis 30 Kohlenstoffatome umfasst, vorzugsweise von 8 bis 15, die wenigstens eine cycloaliphatische Einheit (M) umfasst, mit der Maßgabe, dass die cycloaliphatische Einheit (M) kein Heteroatom in dem Ring umfasst, und das Poly(arylethersulfon)polymer ein anzahlgemitteltes Molekulargewicht ($M_n$) von über 8.000 aufweist.

2. Poly(arylethersulfon)polymer gemäß Anspruch 1, wobei die aromatische Dihalogenverbindung, die wenigstens eine $-S(=O)_2$-Gruppe umfasst, eine Verbindung der allgemeinen Formel (II) ist:

$$X\text{-}[Ar^3\text{-}SO_2\text{-}Ar^4]\text{-}[Ar^5]_n\text{-}[Ar^3\text{-}SO_2\text{-}Ar^4]_m\text{-}X \qquad (II)$$

wobei n und m unabhängig 0, 1, 2, 3 oder 4 sind;
wobei X ein Halogen ausgewählt aus Chlor, Fluor, Brom und Iod ist;
wobei $Ar^3$, $Ar^4$ gleich oder voneinander verschieden sind und aromatische Einheiten der Formel:

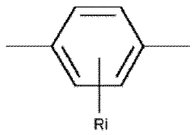

sind,
wobei $Ar^5$ ausgewählt ist aus der Gruppe bestehend aus :

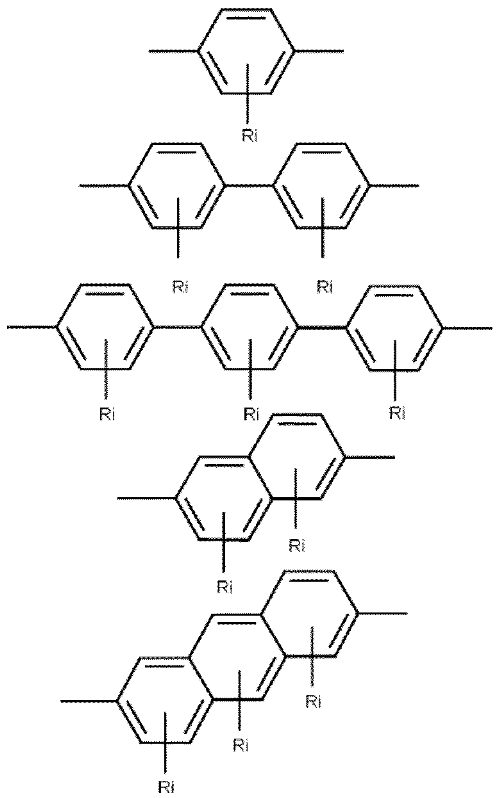

wobei jedes Ri unabhängig ausgewählt ist aus der Gruppe bestehend aus :
Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium, und i 0, 1, 2, 3 oder 4 ist.

**3.** Poly(arylethersulfon)polymer gemäß Anspruch 2, wobei die Verbindung der allgemeinen Formel (II) ausgewählt ist aus 4,4'-Dichlordiphenylsulfon und 4,4'-Difluordiphenylsulfon.

**4.** Poly(arylethersulfon)polymer gemäß einem der Ansprüche 1 bis 3, wobei das wenigstens eine Diol (D) ausgewählt ist aus der Gruppe bestehend aus jenen, die den Formeln (D-1), (D-2), (D-3) und (D-4) entsprechen :

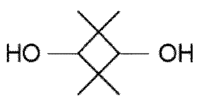

(D-1)

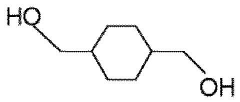

(D-2)

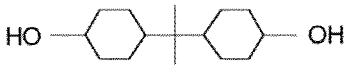

(D-3)

und

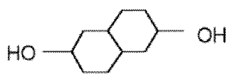

(D-4).

**5.** Poly(arylethersulfon)polymer gemäß einem der Ansprüche 1 bis 3, wobei das wenigstens eine Diol (D) von Formel (D-5) ist:

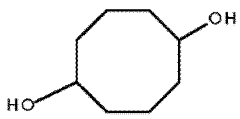

(D-5).

**6.** Poly(arylethersulfon)polymer gemäß einem der Ansprüche 1 bis 5, wobei das anzahlgemittelte Molekulargewicht ($M_n$) gleich oder kleiner als 120000 ist.

**7.** Verfahren zum Herstellen des Poly(arylethersulfon)polymers gemäß einem der Ansprüche 1 bis 6.

**8.** Polymerzusammensetzung, umfassend das Poly(arylethersulfon)polymer gemäß einem der Ansprüche 1 bis 6 und wenigstens einen anderen Bestandteil ausgewählt aus einem Polymer, einem Lösungsmittel, einem Füllstoff, einem Gleitmittel, einem Formtrennmittel, einem antistatischen Mittel, einem Flammhemmer, einem Antibeschlagmittel, einem Mattierungsmittel, einem Pigment, einem Farbstoff und einem optischen Aufheller.

**9.** Polymerzusammensetzung gemäß Anspruch 8, **dadurch gekennzeichnet, dass** sie eine Dotierstofflösung ist, die für die Herstellung von Membranen geeignet ist.

**10.** Gegenstand, umfassend das Poly(arylethersulfon)polymer gemäß einem der Ansprüche 1 bis 6.

**11.** Gegenstand gemäß Anspruch 10, **dadurch gekennzeichnet, dass** er eine Membran ist, die ausgewählt ist aus der Gruppe bestehend aus isotropen oder anisotropen Membranen, porösen oder nichtporösen Membranen, Verbundmembranen und symmetrischen oder nichtsymmetrischen Membranen.

**12.** Gegenstand gemäß Anspruch 11, wobei die Membran in einer Konfiguration ausgewählt aus der Gruppe bestehend aus einer flachen Struktur, einer gewellten Struktur, einer rohrförmigen Struktur und einer Hohlfaser vorliegt.

**13.** Gegenstand gemäß Anspruch 11 oder 12, wobei die Membran eine Hämodialysemembran ist.

**14.** Gegenstand gemäß Anspruch 10, **dadurch gekennzeichnet, dass** sie ein Gegenstand für Lebensmittelkontakt ist, wie z. B. ein Speisetablett, eine Wasserflasche oder eine Babyflasche.

## Revendications

**1.** Polymère de poly(aryléthersulfone) constitué essentiellement d'unités structurales issues de la réaction directe d'au moins un composé dihalo aromatique comprenant au moins un groupe -S(=O)$_2$- et d'au moins un diol (D) ayant la formule générale (I)

HO-Q-OH (I)

dans laquelle Q est un groupe comprenant de 4 à 30 atomes de carbone, préférablement de 8 à 15, qui comprend au moins une fraction cycloaliphatique (M), sous réserve que ladite fraction cycloaliphatique (M) ne comprenne pas d'hétéroatomes dans le cycle, et ledit polymère de poly(aryléthersulfone) ayant une masse moléculaire moyenne en nombre ($M_n$) supérieure à 8 000.

**2.** Polymère de poly(aryléthersulfone) selon la revendication 1, dans lequel le composé dihalo aromatique comprenant au moins un groupe $-S(=O)_2$-est un composé ayant la formule générale (II) :

$$X\text{-}[Ar^3\text{-}SO_2\text{-}Ar^4]\text{-}[Ar^5]_n\text{-}[Ar^3\text{-}SO_2\text{-}Ar^4]_m\text{-}X \qquad (II)$$

dans laquelle n et m valent indépendamment 0, 1, 2, 3 ou 4 ;
dans laquelle X est un halogène sélectionné parmi le chlore, le fluor, le brome et l'iode ;
dans laquelle $Ar^3$ et $Ar^4$ sont identiques ou différents l'un de l'autre et sont des fractions aromatiques ayant la formule :

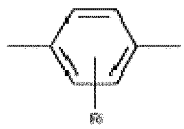

dans laquelle $Ar^5$ est sélectionné dans le groupe constitué de :

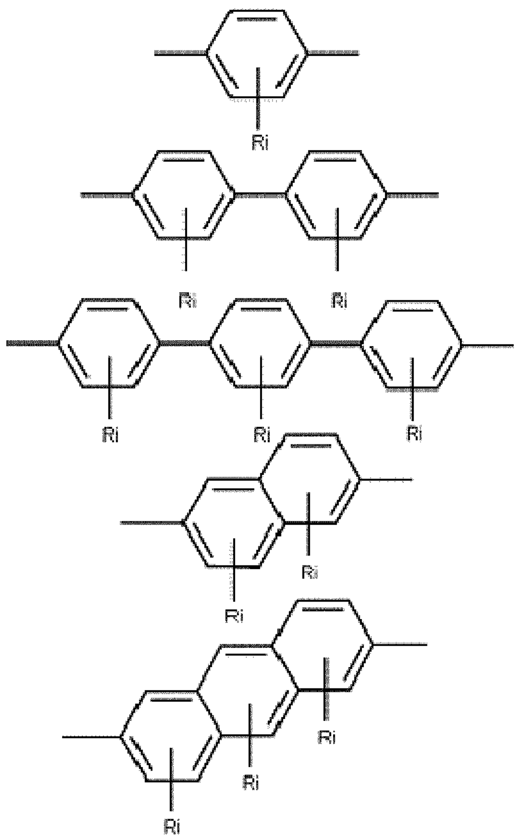

dans laquelle chaque Ri est sélectionné indépendamment dans le groupe constitué de :
un atome d'hydrogène, un atome d'halogène et des groupes alkyle, alcényle, alkynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire, et i vaut 0, 1, 2, 3 ou 4.

**3.** Polymère de poly(aryléthersulfone) selon la revendication 2, dans lequel le composé ayant la formule générale (II) est sélectionné parmi la 4,4'-dichlorodiphénylsulfone et la 4,4'-difluorodiphénylsulfone.

**4.** Polymère de poly(aryléthersulfone) selon l'une quelconque des revendications 1 à 3, dans lequel ledit au moins un diol (D) est sélectionné dans le groupe constitué de groupes selon les formules (D-1), (D-2), (D-3) and (D-4) :

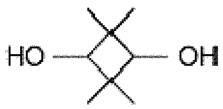

(D-1)

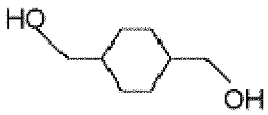

(D-2)

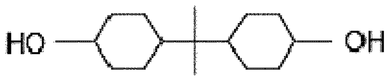

(D-3)

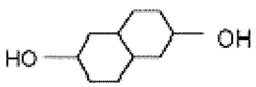

(D-4)

**5.** Polymère de poly(aryléthersulfone) selon l'une quelconque des revendications 1 à 3, dans lequel ledit au moins un diol (D) a la formule (D-5) :

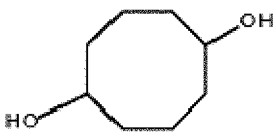

(D-5).

**6.** Polymère de poly(aryléthersulfone) selon l'une quelconque des revendications 1 à 5, dans lequel la masse moléculaire moyenne en nombre ($M_n$) est égale ou inférieure à 120 000.

**7.** Procédé de préparation du polymère de poly(aryléthersulfone) selon l'une quelconque des revendications 1 à 6.

**8.** Composition de polymère comprenant le polymère de poly(aryléthersulfone) selon l'une quelconque des revendications 1 à 6, et au moins un autre ingrédient choisi parmi un polymère, un solvant, une charge, un lubrifiant, un agent de démoulage, un agent antistatique, un retardateur de flamme, un agent anti buée, un agent matifiant, un pigment, un colorant et un azurant optique.

**9.** Composition de polymère selon la revendication 8, **caractérisée en ce qu'**il s'agit d'une solution filable ou coulable convenant pour la préparation de membranes.

**10.** Article comprenant le polymère de poly(aryléthersulfone) selon l'une quelconque des revendications 1 à 6.

**11.** Article selon la revendication 10, **caractérisé en ce qu'**il s'agit d'une membrane qui est sélectionnée dans le groupe constitué de membranes isotropes ou anisotropes, de membranes poreuses ou non poreuses, de membranes composites, ou de membranes symétriques ou non symétriques.

**12.** Article selon la revendication 11, dans lequel ladite membrane est dans une configuration sélectionnée dans le groupe constitué d'une structure plate, d'une structure ondulée, d'une structure tubulaire et d'une fibre creuse.

**13.** Article selon les revendications 11 ou 12, dans lequel ladite membrane est une membrane d'hémodialyse.

**14.** Article selon la revendication 10, **caractérisé en ce qu'**il s'agit d'un article destiné à entrer en contact avec des aliments, tel qu'une barquette alimentaire, une bouteille d'eau ou un biberon.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61647356 A
- EP 12183142 A